# EUROPÄISCHE PATENTSCHRIFT

(11) **EP 0 645 280 B1**
(45) Veröffentlichungstag und Bekanntmachung des Hinweises auf die Patenterteilung: **19.11.1997**
(21) Anmeldenummer: 94114842.1
(22) Anmeldetag: 21.09.1994
(51) Int. Cl.: B60Q 1/14, G02B 26/02

(54) **Schalter, vorzugsweise für Kraftfahrzeug**
Switch for vehicle
Interrupteur pour véhicule

(30) Priorität: 25.09.1993 DE 4332748
(43) Veröffentlichungstag der Anmeldung: 29.03.1995
(73) Patentinhaber: Marquardt GmbH, 78604 Rietheim-Weilheim (DE)
(72) Erfinder: Marquardt, Jakob, D-78604 Rietheim-Weilheim (DE)
(74) Vertreter: Patentanwälte Eisele, Otten & Roth

(56) Entgegenhaltungen:
- DE-A- 4 302 032
- DE-A- 4 309 049
- US-A- 3 946 225
- US-A- 4 328 431
- US-A- 4 726 646
- US-A- 4 994 669

## Beschreibung

Die Erfindung betrifft einen Schalter, vorzugsweise am Lenkrad eines Kraftfahrzeugs, nach dem Oberbegriff des Patentanspruchs 1.

Auf allen Gebieten der modernen Technik findet ein zunehmender Einsatz der Elektronik statt. Dies gilt insbesondere auch für die moderne Automobiltechnik mit einer stetigen Zunahme elektrischer Komponenten, Motoren und Aggregaten sowie elektronischer Systeme, die wenigstens teilweise durch Schalter und Bedienelemente betätigt werden müssen. Es hat sich dabei als vorteilhaft erwiesen, bestimmte Steuerfunktionen, die auch während der Fahrt durch den Fahrzeugführer ausgelöst werden müssen, wie die Fahrtrichtungsanzeiger, die Umschaltung zwischen Fern- und Abblendlicht, die Lichthupe, die Scheibenwischer, die Scheibenwaschanlage, usw., mittels in der Nähe des Lenkrades angeordneter Schalter zu bedienen. Insbesondere sind dazu Schalter am Lenkrad angeordnet, die sogenannten Lenkstockschalter, bei denen mit einem Schalthebel mehrere Funktionen gesteuert werden.

Ein derartiger Lenkstockschalter ist aus der DE-PS 32 11 672 bekannt geworden. Der Schalthebel des Lenkstockschalters geht von einem seitlich an der Lenksäule des Kraftfahrzeugs befestigten Gehäuse ab und ist in mehreren Ebenen zur Lenksäule beweglich gelagert. Im Gehäuse befinden sich elektrische Schaltelemente zur Bedienung einzelner Funktionen, wie Blinker, Scheibenwischer, u. dgl., wobei der Schalthebel mit diesen Schaltelementen zu deren Betätigung in Wirkverbindung steht.

Nachteilig bei einem derartigen Lenkstockschalter ist der komplizierte mechanische Aufbau, um die Wirkverbindungen zwischen dem Schalthebel und den einzelnen elektrischen Schaltelementen herzustellen. Um die elektrischen Schaltelemente auf einer Leiterplatte anordnen zu können, sind aufwendige Anlenkungen an die Kontakte und komplizierte Kontaktbewegungen erforderlich. Dadurch resultiert nicht nur eine erschwerte Montage und eine Verteuerung des Lenkstockschalters, es kommt hinzu, daß der Lenkstockschalter fehleranfällig ist und dessen Mechanik einem erhöhten Verschleiß ausgesetzt ist. Ebenso zieht dies einen erhöhten Verschleiß der Kontakte der elektrischen Schaltelemente nach sich. Bereits bei Ausfall eines einzigen elektrischen Schaltelements muß der gesamte Lenkstockschalter ausgetauscht werden.

Aufgrund der Vielzahl der im Lenkstockschalter integrierten Funktionen ist auch eine umfangreiche Verdrahtung der elektrischen Schaltelemente im Lenkstockschalter erforderlich. Dadurch verkompliziert und verteuert sich wiederum der Lenkstockschalter. Weiter können durch die umfangreiche Verdrahtung Probleme durch elektromagnetische Störabstrahlungen der konventionellen Verdrahtungsleitungen sowie umgekehrt durch Aufnahme von Störsignalen in den Verdrahtungsleitungen auftreten.

Wegen der auftretenden hohen Schaltströme, beispielsweise für die Lichtanlage, den Scheibenwischer, u. dgl. werden große Schaltkräfte benötigt. Derartige große Schaltkräfte sind ergonomisch von Nachteil.

Weiter ist aus der US-A-4 994 669 ein mittels eines Schalthebels betätigbarer, als Joystick-Schalter für Computer-Anwendungen einsetzbarer Schalter bekannt geworden. Dieser Schalter besitzt ein Gehäuse, aus dem ein elastischer Schalthebel herausragt. Im Gehäuseinneren befinden sich Leiterplatten, auf denen Lichtsende- und Lichtempfangs-Elemente angeordnet sind. Am Schalthebel ist im Gehäuseinneren eine Scheibe derart angeordnet, daß die Scheibe bei elastischer Verformung des Schalthebels den Strahlengang zwischen dem Lichtsende- und Lichtempfangselement zur Betätigung des Schalters unterbricht.

Bei diesem Schalter sind die elektrischen Schaltelemente durch die optisch wirkenden, an sich verschleißarmen Lichtsende- und Lichtempfangselemente ersetzt, wobei die Lichtsende- und Lichtempfangselemente auf Leiterplatten angeordnet sind. Falls mehrere dieser Schaltelemente auf einer Leiterplatte plaziert werden, vereinfacht sich zwar einerseits die Verdrahtung der Schaltelemente. Andererseits sind nach wie vor komplizierte mechanische Anlenkungen notwendig, um die Wirkverbindungen zwischen dem Schalthebel und aller auf der Leiterplatte befindlichen Lichtsende- und Lichtempfangselemente zu gewährleisten. Damit weist auch dieser auf optischen Wirkprinzipien basierende Schalter im wesentlichen die genannten Nachteile auf.

Der Erfindung liegt die Aufgabe zugrunde einen eine Leiterplatte zur Aufnahme elektrischer Bauelemente beinhaltenden Schalter, vorzugsweise für das Lenkrad eines Kraftfahrzeugs, derart weiterzuentwickeln, daß dieser bei wenigstens gleicher Funktionalität mechanisch und elektrisch einfacher ausgestaltet ist.

Diese Aufgabe wird bei einem gattungsgemäßen Schalter durch die kennzeichnenden Merkmale des Anspruchs 1 gelöst.

Weitere Ausgestaltungen der Erfindung sind Gegenstand der Unteransprüche. Die Wirkverbindung zwischen dem Schalthebel und den optischen Schaltern des Lenkstockschalters kann über ein Kupplungselement hergestellt werden, wobei das Kupplungselement vorzugsweise in der Art eines Kardangelenks ausgebildet ist. Insbesondere kann zur weiteren Einsparung von elektrischen Verbindungsleitungen der Schalter auch einen Busanschluß besitzen, so daß die in Bussignale umgewandelten Schaltsignale über einen Bus an die entsprechenden Geräte zur Weiterverarbeitung weitergeleitet werden. Es bietet sich weiter an, den Schalter mit gegebenenfalls zusätzlichen Schaltern, wie einen Schalter für die Geschwindigkeitsregelanlage, zu kombinieren, womit auch dessen Signale über den gemeinsamen Busanschluß weitergeleitet werden können.

Die mit der Erfindung erzielten Vorteile bestehen insbesondere darin, daß der Schalter mechanisch sehr einfach aufgebaut ist. Es genügt eine Anordnung des Schalthebels mittels einfacher Kupplungsgelenke am Gehäuse, beispielsweise eines Kardangelenks, um die in den einzelnen Ebenen erforderliche Bewegbarkeit des Schalthebels zu realisieren. Durch die Möglichkeit der Anordnung der Schaltelemente an zweckmäßiger Stelle im Gehäuse sind keine komplizierten Kontaktbewegungen notwendig. Somit ist der Schalter kostengünstiger herzustellen. Vorteilhafterweise tritt weiter keinerlei Kontaktabnutzung auf, da der eigentliche Schaltvorgang auf optischem Wege ausgeführt wird. Damit arbeitet der Schalter verschleißfrei und ist störungssicherer. Außerdem ist der Schalter ergonomisch verbessert zu bedienen.

Die Anordnung des optischen Lichtsende- und Lichtempfangselements auf einer Leiterplatte sowie der optischen Schalter an zweckmäßigem Ort im Gehäuse hat hohe technische Bedeutung hinsichtlich des Herstellverfahrens für derartige Platinen. So ist es möglich, diese gemeinsam mit den elektrischen und elektronischen Elementen bei der Fertigung zu bestücken, was separat zum Einbau der optischen Schalter im Gehäuse erfolgen kann. Man erreicht dadurch eine sehr einfache und kostengünstige Montage des Schalters.

Die elektrischen und elektronischen Elemente können vollständig auf einer Leiterplatte, also in einer Ebene angeordnet werden. Dadurch wird eine einfache elektrische Verdrahtung erreicht. Der Einfluß von Störsignalen, die aufgenommen oder abgegeben werden können, ist beim erfindungsgemäßen Schalter eliminiert. Folglich sind Fehlfunktionen minimiert, so daß sich derartige Schalter besonders vorteilhaft für sicherheitsrelevante Funktionen, beispielsweise das Schalten der Fahrtrichtungsanzeiger in Kraftfahrzeugen, einsetzen lassen.

Ausführungsbeispiele der Erfindung sind in den Zeichnungen dargestellt und werden im folgenden näher beschrieben. Es zeigen
- Fig. 1: eine Prinzipskizze für die Anordnung von Schaltern am Lenkrad eines Kraftfahrzeugs,
- Fig. 2: einen Schnitt durch einen Lenkstockschalter entlang der Linie 2-2 in Fig. 1,
- Fig. 3: einen Schnitt entlang der Linie 3-3 in Fig. 2,
- Fig. 4: einen Schnitt entlang der Linie 4-4 in Fig. 3 in vergrößerter Darstellung,
- Fig. 5: einen Detailausschnitt aus Fig. 2, wobei einer der optischen Schalter vergrößert dargestellt ist,
- Fig. 6: einen optischen Schalter in weiterer Ausführungsform,
- Fig. 7: einen Teilschnitt durch einen Lenkstockschalter mit zusätzlich angeordnetem Schalter und
- Fig. 8: schematisch einen Schnitt durch einen Lenkstockschalter wie in Fig. 2 gemäß einer weiteren Ausführungsform.

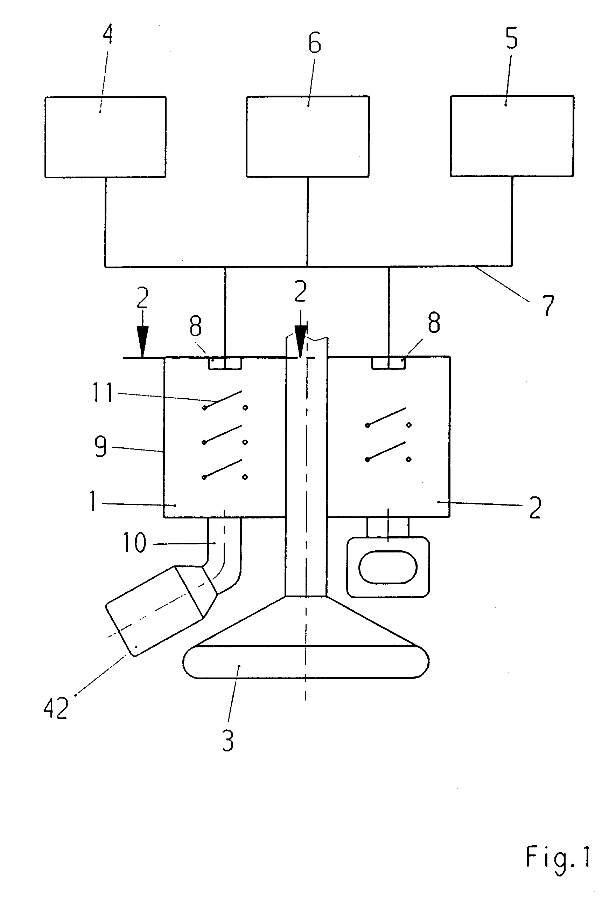

Der erfindungsgemäße Schalter kann zur Bedienung von Steuergeräten in Kraftfahrzeugen eingesetzt werden. Durch die Steuergeräte werden entsprechende Funktionen, wie Blinker, Scheibenwischer, Scheibenwaschanlage, Fernlicht, Lichthupe, u. dgl. ausgelöst. Wie in Fig. 1 gezeigt ist, sind derartige Schalter in der Nähe des Lenkrades des Kraftfahrzeugs angeordnet. Im einzelnen handelt es sich um einen Lenkstockschalter 1, der gemeinsam mit einem Zündschloßschalter 2 an der Lenksäule 3 des Kraftfahrzeugs befestigt ist. Der Lenkstockschalter 1 und der Zündschloßschalter 2 sind mit den zugehörigen Steuergeräten 4, 5 und Anzeigeinstrumenten 6 über einen gemeinsamen Bus 7, beispielsweise den bekannten CAN-Bus, miteinander vernetzt. Zu derartigen Bus-Systemen wird auf die Literaturstelle Philips: CAN-Produkte für universelle Anwendungsfelder, Januar 1992 oder die Literaturstelle in der Zeitschrift: Elektronik 1992, Heft 22, "Offenes Buskonzept für Schalter, Sensoren, Aktoren" verwiesen.

Der Lenkstockschalter 1 besitzt ein seitlich an der Lenksäule befestigtes Gehäuse 9. Vom Gehäuse 9 geht ein das Bedienelement darstellender Schalthebel 10 ab. Der Schalthebel 10 ist in mehreren Ebenen bewegbar und steht mit, in Fig. 1 lediglich schematisch angedeuteten, im Gehäuse 9 befindlichen Schaltelementen 11 in Wirkverbindung, so daß bei Bewegung des Schalthebels 10 in der jeweiligen Ebene die zugehörigen Schaltelemente 11 betätigt werden. Die von den Schaltelementen 11 dabei abgegebenen Signale werden von einem im Gehäuse 9 befindlichen Bus-IC 8 in ein busfähiges Signal umgewandelt und über den Bus 7 den zugehörigen Steuergeräten 4, 5 oder Anzeigeinstrument 6 zur weiteren Verarbeitung zugeleitet. Die Steuergeräte 4, 5 lösen dann die jeweiligen Funktionen am Kraftfahrzeug aus.

Im einzelnen handelt es sich bei vorliegendem Lenkstockschalter 1 um die folgenden Funktionen. Der Schalthebel 10 ist in einer ersten Ebene, die quer zur Lenksäule verläuft (in Fig. 1 im wesentlichen senkrecht zur Zeichenebene stehend), beweglich im Gehäuse 9 gelagert, wobei durch Drehbewegung des Schalthebels 10 in die jeweilige Drehrichtung die entsprechenden Blinker am Kraftfahrzeug geschaltet werden. In einer zweiten, parallel zur Lenksäule verlaufenden Ebene (in Fig. 1 im wesentlichen in der Zeichenebene verlaufend) ist der Schalthebel 10 zusätzlich beweglich gelagert. Eine Drehbewegung des Schalthebels 10 in der ersten Drehrichtung dieser Ebene betätigt die Umschaltung von Fern- auf Abblendlicht. In der entgegengesetzten Drehrichtung wird die Lichthupe betätigt. Weiter läßt sich ein Handgriff 42 am Schalthebel 10 um dessen Längsachse drehen, wodurch eine Drehbewegung in einem Element des Schalthebels 10 in einer dritten Ebene quer zur Lenksäule 3 (in Fig. 1 im wesentlichen senkrecht zur Zeichenebene stehend) erzeugt wird, wobei die Scheibenwischer angesteuert werden. Schließlich läßt sich der Handgriff 42 am Schalthebel 10 verschieben, so daß eine Verschiebebewegung eines Elements des Schalthebels 10 in einer vierten Ebene parallel zur Lenksäule 3 (in Fig. 1 im wesentlichen in der Zeichenebene verlaufend) bewirkt wird. Dabei wird die Scheibenwaschanlage sowie gegebenenfalls die Scheinwerferwaschanlage in Funktion gesetzt. Am Gehäuse 9 lassen sich wahlweise noch weitere Schalter, beispielsweise ein Schalter für die automatische Geschwindigkeitsregelung, anschließen.

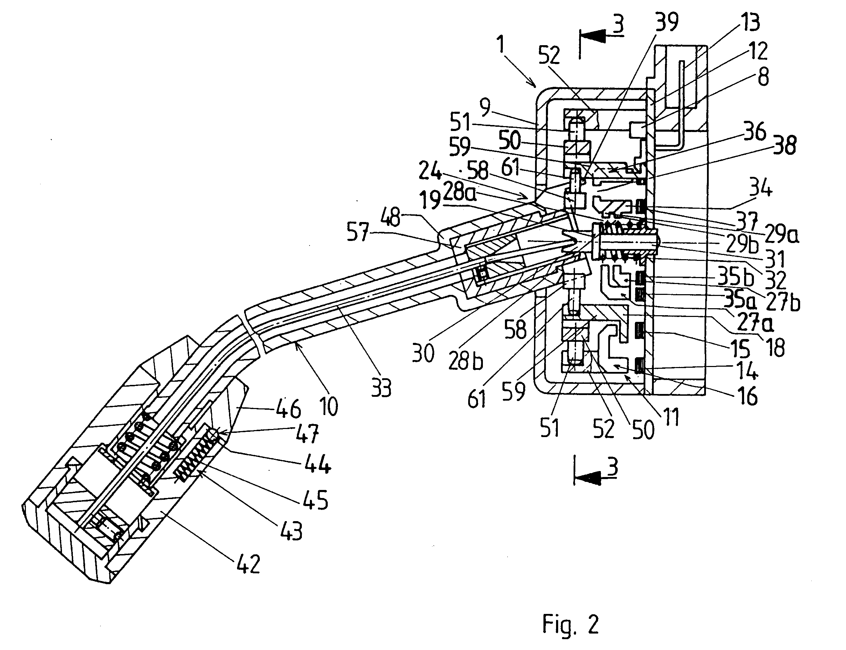

Wie näher in Fig. 2 zu sehen ist, sind die Schaltelemente 11 auf einer Leiterplatte 12 angeordnet, die das Gehäuse 9 des Lenkstockschalters 1 an einer Seite abschließt. Auf der Leiterplatte 12 befinden sich noch das Bus-IC 8 sowie gegebenenfalls weitere, nicht näher gezeigte elektronische Bauteile. Weiter ist die Leiterplatte 12 mit elektrischen Anschlüssen 13 für den Bus 7 versehen, die an der der Außenseite des Gehäuses 9 zugeordneten Seite der Leiterplatte 12 angeordnet sind und wiederum über die Leiterplatte 12 mit dem Bus-IC 8 in elektrischer Verbindung stehen. Wenigstens eines der Schaltelemente 11 auf der Leiterplatte 12 ist als optisches Lichtsendeelement 14 und/oder optisches Lichtempfangselement 15 ausgebildet, das in optischer Verbindung mit einem optischen Schalter 16 steht.

Der optische Schalter 16 besteht in einer ersten Ausführungsform, wie in Fig. 5 vergrößert dargestellt ist, aus einer Lichtleiteranordnung 17 und einem mit dem Schalthebel 10 zusammenwirkenden Kopplungselement 18. Über Teile der Lichtleiteranordnung 17 besitzt der optische Schalter 16 mit der Leiterplatte 12 eine derartige Verbindung, daß eine durch den optischen Schalter 16 beeinflußbare optische Kopplungsverbindung zwischen dem auf der Leiterplatte 12 angeordneten Lichtsendeelement 14 und dem optischen Lichtempfangselement 15 für das übertragene Licht gebildet wird.

Die Lichtleiteranordnung 17 ist vorzugsweise als ein massives Element in der Art eines Monolithen ausgebildet. Sie besteht aus drei starren und massiven, in der Art einer U-Brücke miteinander verbundenen Schenkeln 20, 21, 22. Die Schenkel 20, 22 verlaufen ungefähr senkrecht zur Leiterplatte 12 und der Schenkel 21 parallel zur Leiterplatte 12. Die Grundfläche des Schenkels 20 ist am Lichtsendeelement 14 und diejenige des Schenkels 22 am Lichtempfangselement 15 angeordnet, wobei jedoch zwischen dem Schenkel 22 und dem Lichtempfangselement 15 sich eine Trennstelle 23 befindet, in die das Kopplungselement 18 eingreift. Das Kopplungselement 18 besteht vorliegend aus einer in die Trennstelle 23 drehbaren Lochblende 40, die bis auf eine Öffnung 41 masssiv ausgebildet ist.

Die Lichtleiteranordnung 17 besteht, wie an sich bekannt, aus einem Kernbereich und einem umgebenden Mantel, der einen vom Kernbereich unterschiedlichen Brechungsindex besitzt, derart daß das eingestrahlte Licht durch Totalreflexion innerhalb des Kernbereichs geführt wird. Als Material für die Lichtleiteranordnung 17 kann Glas oder auch ein optisch transparenter Kunststoff mit dem entsprechenden Brechungsindex gewählt werden. Grundsätzlich ist es auch möglich, den optischen Schalter 16 als ein auf einem Substrat integriertes optisches Bauteil auszubilden. Man wird dann das Kopplungselement 18 bevorzugterweise ebenfalls in das Substrat integrieren, beispielsweise in Form einer bewegbaren Membran.

Das von dem auf der Leiterplatte 12 befindlichen Lichtsendeelement 14 abgestrahlte Licht wird in den als optisches Verbindungselement dienenden Schenkel 20 der Lichtleiteranordnung 17 eingespeist. Von dort wird das Licht über den Schenkel 21 bis in den Schenkel 22 geführt, wo es durch das Kopplungselement 18 schaltbar beeinflußt werden kann. Ist das Kopplungselement 18 in einer ersten, in Fig. 2 sichtbaren Stellung, so befindet sich der massive Teil der Lochblende 40 am Kopplungselement 18 innerhalb der Trennstelle 23 und das Licht wird von der Lochblende 40 absorbiert. Dadurch wird vom Lichtempfangselement 15 kein elektrisches Signal erzeugt, so daß sich der optische Schalter 16 in "Aus"-Stellung befindet. In einer zweiten, in Fig. 5 gezeigten Stellung, befindet sich die Öffnung 41 der Lochblende 40 am Kopplungselement 18 in der Trennstelle 23, so daß das Licht von der Lochblende 40 hindurchgelassen wird und dadurch vom Schenkel 22 direkt dem Lichtempfangselement 15 zugeführt wird. Dabei erzeugt das Lichtempfangselement 15 ein entsprechendes elektrisches Signal, womit sich der optische Schalter 16 in "Ein"-Stellung befindet. Wie man also sieht, ist das Lichtsendeelement 14 mit dem Lichtempfangselement 15 über die Lichtleiteranordnung 17 optisch verbindbar, so daß mittels des Kopplungselements 18 das übertragene Licht schaltbar beeinflußt werden kann, wobei die vom optischen Schalter 16 erzeugten optischen Signale mittels des Lichtempfangselements 15 in ein elektrisches Signal umgewandelt werden, das im Bus-IC 8 schließlich in ein Bus-Signal weiterverarbeitet wird.

Als Lichtsendeelement 14 eignet sich ein herkömmliches Leuchtmittel, beispielsweise eine Glühbirne. Vorzugsweise wird jedoch eine Leuchtdiode verwendet. Bei dem optischen Lichtempfangselement 15 kann es sich um eine Photodiode oder einen Phototransistor handeln. Eine besonders einfache Bestückbarkeit der Leiterplatte 12 wird erzielt, indem das Lichtsendeelement 14 und das Lichtempfangselement 15 als SMD-Bauteile (SMD = Surface Mounted Device) ausgebildet sind. Grundsätzlich ist es zwar möglich, das Lichtsendeelement 14 und das Lichtempfangselement 15 auf verschiedenen, gegebenenfalls sogar flexiblen Leiterplatten, die über ein Verbindungskabel elektrisch miteinander verbunden sind, anzuordnen, besonders bevorzugt wird jedoch deren Anordnung auf einer einzigen Leiterplatte.

Der optische Schalter 16 ist innerhalb des Gehäuses 9 derart zweckmäßig angeordnet, daß der Schaltvorgang am optischen Schalter 16 durch die Bewegung des Schalthebels 10 bewirkbar ist. Falls erforderlich kann der optische Schalter 16 getrennt von der Leiterplatte 12 angeordnet sein und zwar derart, daß er außerhalb der Ebene der Leiterplatte 12 verläuft. In vorliegendem Fall steht der optische Schalter 16 ungefähr senkrecht zur Ebene der Leiterplatte 12. Es ist nun hervorzuheben, daß dadurch das Zusammenwirken zwischen dem Schalthebel 10 und dem optischen Schalter 16 auf einfache Art und Weise erzielbar ist, indem gemäß Fig. 2 ein einfaches mechanisches Kupplungselement 24 Verwendung findet.

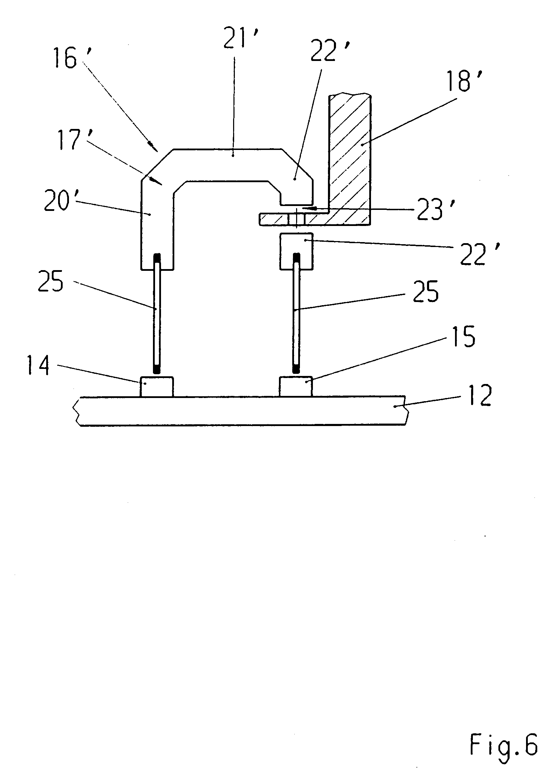

Bei einer weiteren in Fig. 6 gezeigten Ausführungsform für den optischen Schalter 16' kann dieser, falls zweckmäßigerweise für die Bedienbarkeit durch den Schalthebel 10 erforderlich, noch weiter entfernt von der Leiterplatte 12 angeordnet sein. Dazu ist der optische Schalter 16' mit dem Lichtsendeelement 14 und Lichtempfangselement 15 über zugeordnete optische Lichtleiter 25, vorzugsweise flexible Lichtleiter-Kabel, verbunden. Ansonsten besteht die Lichtleiteranordnung 17' ebenfalls aus drei U-förmig miteinander verbundenen Schenkeln 20', 21', 22', wobei der Schenkel 22' an geeigneter Stelle eine Trennstelle 23' besitzt, in die das Kopplungselement 18' drehbar eingreifen kann. Die Anschlüsse der Lichtleiter 25 an der Lichtleiteranordnung 17' des optischen Schalters 16' können beispielsweise durch Kleben oder Ultraschall-Schweißen erfolgen. Es sind jedoch auch separate Steckverbindungen zwischen den Lichtleitern 25 und der Lichtleiteranordnung 17' denkbar. Falls notwendig, ist es dann auch auf einfache Weise möglich, das Lichtsendeelement 14 und das optische Empfangselement 15 auf verschiedenen Leiterplatten anzuordnen.

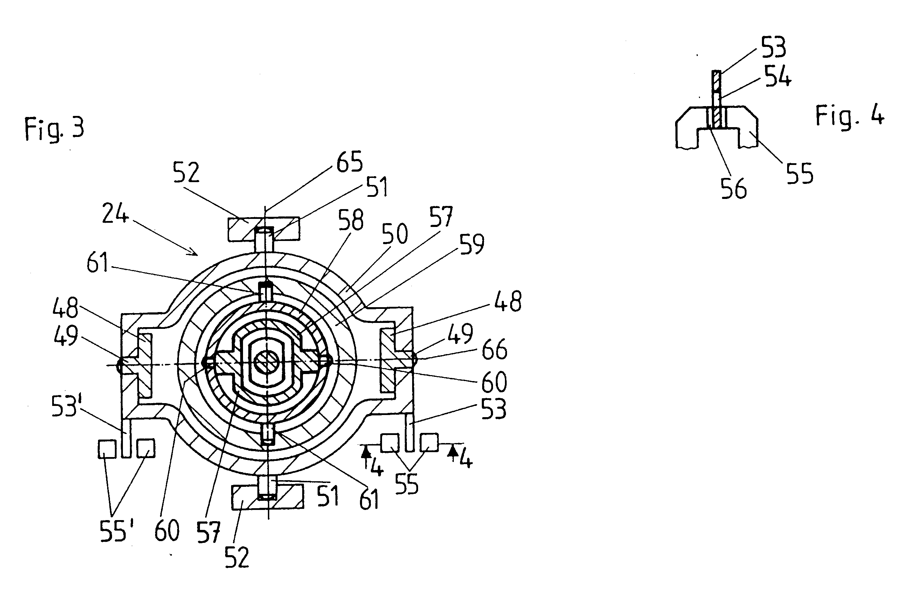

Beim vorliegenden Lenkstockschalter 1 sind noch weitere Schaltelemente 11 durch in Fig. 2 und 3 gezeigte optische Schalter 36, 55, 55' realisiert, die analog zum beschriebenen optischen Schalter 16 aufgebaut sind. Die optischen Schalter 36, 55, 55' werden ebenfalls über den Schalthebel 10 betätigt, wobei das Zusammenwirken wie beim optischen Schalter 16 mittels des Kupplungselements 24 erfolgt. Der nähere Aufbau des Kupplungselements 24 geht aus den Fig. 2 und 3 hervor.

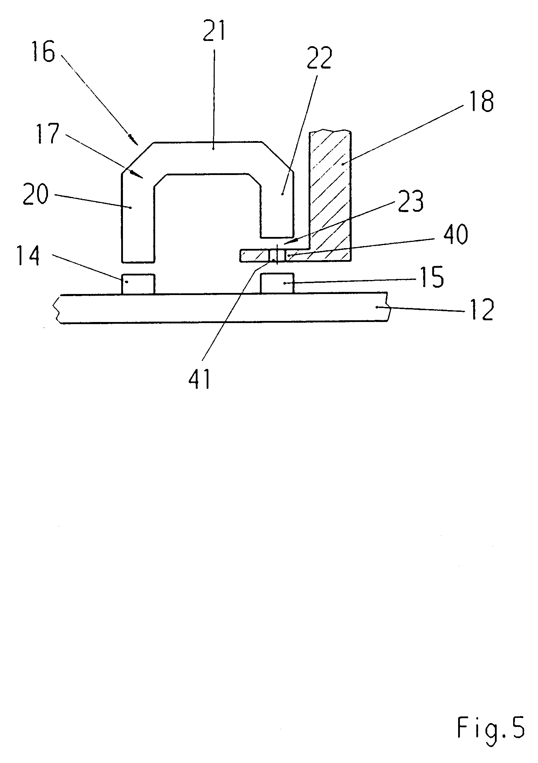

Wie in Fig. 2 zu sehen ist, endet der Schalthebel 10 an der dem Gehäuse 9 zugeordneten Seite in einer Lagerhülse 48, die Teil des Kupplungselements 24 ist. Die Lagerhülse 48 ist, wie näher in Fig. 3 gezeigt ist, über Verbindungsglieder 49 mit einem Koppelring 50 verbunden. Der Koppelring 50 ist mittels Drehzapfen 51 in zwei auf der Leiterplatte 12 befestigten Lagerböcken 52 um eine erste Drehachse 65 drehbar gelagert. Am Koppelring 50 befinden sich Ansätze 53, 53', die jeweils in die Trennstellen 56 eines optischen Schalters 55, 55' eingreifen. Dieser mit der Leiterplatte 12 in Verbindung stehende und analog zum optischen Schalter 16 ausgebildete optische Schalter 55, 55' ist in Fig. 4 vergrößert dargestellt. Durch Drehung des Schalthebels 10 in einer ersten Drehrichtung in der ersten Ebene um die Drehachse 65 wird somit der Koppelring 50 mitsamt der Lagerhülse 48 um die Drehzapfen 51 in der ersten Ebene bewegt, wobei die Öffnung 54 im Ansatz 53 in die Trennstelle 56 bewegt und ein Signal im optischen Schalter 55 erzeugt wird. Wird der Schalthebel 10 in die zweite, entgegengesetzte Drehrichtung in der ersten Ebene um die Drehachse 65 bewegt, so bewegt sich ebenso eine Öffnung 54 im Ansatz 53' in die Trennstelle 56 des optischen Schalters 55', wobei ein weiteres Signal erzeugbar ist. Durch diese Signale des jeweiligen optischen Schalters 55, 55' wird der Blinker am Kraftfahrzeug für die entsprechende Fahrtrichtung eingeschaltet.

Die Lagerhülse 48 ist gemäß Fig. 3 am Koppelring 50 weiter mittels der Verbindungsglieder 49 um eine zweite Drehachse 66 drehbar gelagert. Wird der Schalthebel 10 in der zweiten Ebene gedreht, so erfolgt eine Drehbewegung der Lagerhülse 48 an den Verbindungsgliedern 49 um die Drehachse 66. An der der Leiterplatte 12 zugeordneten Seite der Lagerhülse 48 befindet sich eine Blende 39, die in die Trennstelle 38 des optischen Schalters 36 eingreift, wie in Fig. 2 gezeigt ist. Dabei wird im optischen Schalter 36 ein Signal erzeugt, das die Lichthupe betätigt. Wird der Schalthebel 10 in dieser zweiten Ebene um die Drehachse 66 in Gegenrichtung bewegt, so greift eine weitere, nicht näher gezeigte Blende in einen ebenfalls nicht gezeigten, im Gehäuse 9 befindlichen optischen Schalter ein, wobei das Fernlicht geschaltet wird.

Wie anhand der Fig. 2 zu sehen ist, wird bei Drehung des Handgriffs 42 um die Längsachse des Schalthebels 10 eine mit dem Handgriff 42 in Verbindung stehende Welle 33, die im hohlen Schalthebel 10 verläuft, bewegt. Im Innern der Lagerhülse 48 befindet sich eine dem Kupplungselement 24 zugehörige Drehhülse 57, die durch die Welle 33 bewegt wird. Die Drehbewegung der Drehhülse 57 wird über einen Zwischenring 58 auf einen Drehring 59 übertragen, wie am besten der Fig. 3 entnommen werden kann. Dazu sind an der Drehhülse 57 Mitnehmerzapfen 60 angeordnet, die in den Zwischenring 58 derart eingreifen, daß sich die Drehhülse 57 um die Drehachse 66 am Zwischenring 58 drehen kann. Am Zwischenring 58 befinden sich wiederum Drehzapfen 61, die in den Drehring 59 eingreifen, so daß der Zwischenring 58 um die Drehachse 65 drehbar ist. Damit kann sich der Zwischenring 58 mitsamt der Drehhülse 57 bei Drehung des Schalthebels 10 in der ersten Ebene um die erste Drehachse 65 mitdrehen, während der Drehring 59 seine Lage beibehält. Eine Drehbewegung des Schalthebels 10 in der zweiten Ebene um die zweite Drehachse 66 bewirkt, daß sich die Drehhülse 57 ebenfalls um die zweite Drehachse 66 mitdreht, während der Zwischenring 58 und der Drehring 59 ihre Lage beibehalten. Folglich wird die Stellung des Drehrings 59 durch Drehung des Schalthebels in der ersten und zweiten Ebene nicht verändert, insbesondere ist die Stellung des Drehrings 59 in der dritten Ebene unabhängig von der Stellung des Schalthebels 10 in der ersten und zweiten Ebene. Damit kann die Drehung des Handgriffs 42 von der Drehhülse 57 durch die in den Zwischenring 58 eingreifenden Mitnehmerzapfen 60 auf den Zwischenring 58 und vom Zwischenring 58 über die in den Drehring 59 eingreifenden Drehzapfen 61 auf den Drehring 59 unabhängig von der jeweiligen Stellung des Schalthebels 10 übertragen werden. Die Drehbewegung des Handgriffs 42 um die Längsachse des Schalthebels 10 führt somit zu einer entsprechenden Drehbewegung des Drehrings 59 in der dritten Ebene.

Der Drehring 59 dient zum Betätigen des optischen Schalters 16 für den Scheibenwischer. Dazu befindet sich am Drehring 59 ein als Ansatz ausgebildetes und mit dem Drehring 59 bewegtes Kopplungselement 18, wie der Fig. 2 entnommen werden kann. Das Kopplungselement 18 greift, wie bereits allgemein zur Wirkungsweise des optischen Schalters anhand der Fig. 5 beschrieben, in die Trennstelle 23 des optischen Schalters 16 ein. Das Kopplungselement 18 kann durch Drehung des Drehrings 59 weitere benachbart zum optischen Schalter 16 angeordnete, nicht näher gezeigte optische Schalter beeinflussen, um die jeweilige Geschwindigkeit des Scheibenwischers einzuschalten. Um die zugehörige Schaltposition für den jeweiligen optischen Schalter festzulegen, ist im Handgriff 42 eine Rasteinrichtung 43 ausgebildet. Die Rasteinrichtung 43 besitzt eine Kugel 44, die mit der Kraft einer Feder 45 beaufschlagt ist. Dadurch rastet die Kugel 44 in entsprechend den Raststellungen angeordneten Vertiefungen 47 im Gegenstück 46 zum Handgriff 42, das fest am Schalthebel 10 angebracht ist, ein.

Wie man sieht, wird die Wirkverbindung zwischen der Bewegung des Schalthebels 10 und den optischen Schaltern 16, 36, 55, 55' im Gehäuse 9 durch das Kupplungselement 24 hergestellt, das im wesentlichen ein einfaches Kardangelenk enthält, wobei voneinander unabhängige Drehbewegungen des Schalthebels 10 in mehreren aufeinander senkrecht stehenden Ebenen ermöglicht werden. Dieses am Lagerbock 52 gehalterte Kupplungselement 24 des Schalthebels 10 besteht zum einen aus der Lagerhülse 48 und dem Koppelring 50, wobei die Lagerhülse 48 um die Verbindungsglieder 49 und der Koppelring 50 um die Drehzapfen 51 in zwei Ebenen drehbar sind. Die Verbindungsglieder 49 und die Drehzapfen 51 stehen im wesentlichen senkrecht in der Art eines Kardangelenks aufeinander. Die Drehung in der dritten Ebene wird durch das im Kupplungsgelenk 24 enthaltene Kardangelenk ermöglicht, das aus der Drehhülse 57, dem Zwischenring 58 und dem Drehring 59 besteht, wobei Mitnehmerzapfen 60 der Drehhülse 57 in den Zwischenring 58 und Drehzapfen 61 des Zwischenrings 58 in den Drehring 59 eingreifen. Die Mitnehmerzapfen 60 und Drehzapfen 61 stehen ungefähr senkrecht aufeinander, wobei die Eingriffstellen der Mitnehmerzapfen 60 und der Drehzapfen 61, wie bei Kardangelenken üblich, ausgebuchst sein können.

Eine weitere Bewegungsmöglichkeit des Handgriffs 42 besteht schließlich noch in dessen Verschiebung in Richtung des Schalthebels 10, wobei die Welle 33 gemäß Fig. 2 in der vierten Ebene längsverschoben wird. Über die Welle 33 wird gleichzeitig eine Aufnahme 30 gegen die Rückstellkraft eines Federelementes 32 an einer auf der Leiterplatte 12 befestigten Führung 31 in Richtung senkrecht zur Leiterplatte 12 verschoben. An der Aufnahme 30 befindet sich ein lichtdurchlässiges Kopplungselement 19 für die weiteren optischen Schalter 27a, 27b. Durch entsprechende Verschiebung des Handgriffs 42 ist das lichtdurchlässige Kopplungselement 19 in die Trennstellen 28a, 28b des jeweiligen optischen Schalters 27a, 27b bringbar, so daß die optische Verbindung im jeweiligen optischen Schalter 27a, 27b geschlossen wird. Bei geschlossener optischer Verbindung wird von dem jeweiligen optischen Lichtempfangselement 35a, 35b ein elektrisches Signal erzeugt, wodurch die Scheibenwaschanlage bzw. die Scheinwerferwaschanlage eingeschaltet wird.

Bei den Schaltern 27a, 27b handelt es sich um eine weitere Ausführungsform für einen optischen Schalter. Während für die optischen Schalter 16, 16' jeweils ein Lichtsendeelement 14 auf der Leiterplatte 12 angeordnet ist, genügt es für die Einspeisung von Licht in die optischen Schalter 27a, 27b nur ein einziges Lichtsendeelement 37 auf der Leiterplatte 12 vorzusehen. Dazu gehen von dem ungefähr senkrecht zur Leiterplatte 12 verlaufenden Schenkel 34 der optischen Schalter 27a, 27b, der dem Lichtsendeelement 37 zugeordnet ist, einzelne ungefähr parallel zur Leiterplatte 12 verlaufende Schenkel 29a, 29b mit den Trennstellen 28a, 28b in unterschiedlichen Entfernungen von der Leiterplatte 12 ab. Damit liegen die Trennstellen 28a, 28b parallel, jedoch mit unterschiedlichem Abstand zur Leiterplatte 12. Mit demselben Schenkel 34 steht auch noch weiter der bereits erwähnte, für die Betätigung der Lichthupe bestimmte optische Schalter 36 in Verbindung.

Ebenso gut ist es möglich, die optischen Schalter 27a, 27b, 36 mittels eines optisches Verbindungselementes mit dem Lichtsendeelement 37 auf der Leiterplatte 12 zu verbinden, wobei das optische Verbindungselement als Faserbündel von Lichtleitern ausgebildet ist. Das gesamte Faserbündel steht dann in optischem Kontakt mit dem Lichtsendeelement 37. Zwischen der Leiterplatte 12 und den jeweiligen optischen Schaltern ist das Faserbündel aufgetrennt und wenigstens je eine Lichtleitfaser ist zum jeweiligen optischen Schalter geführt.

Die Schaltelemente 11 im Lenkstockschalter 1 sind als optische Schalter ausgebildet. Falls gewünscht und zweckmäßig können auch einzelne dieser Schaltelemente 11 im Gehäuse 9 als herkömmliche elektrische Schaltelemente ausgebildet sein.

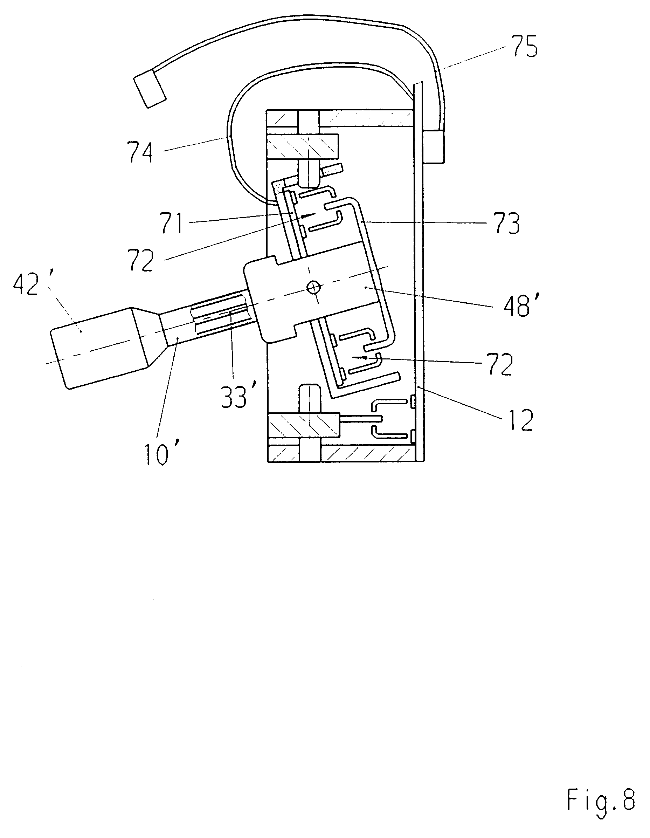

Bei einer weiteren Ausführung kann auf das Kardangelenk im Kupplungselement 24 zur Übertragung der Drehbewegung des Handgriffs 42 verzichtet werden. Wie in Fig. 8 zu sehen ist, ist an der in der ersten und zweiten Ebene wie beim Schalthebel 10 des ersten Ausführungsbeispiels drehbar gelagerten Lagerhülse 48' des Schalthebels 10' eine weitere Leiterplatte 71 mit optischen Schaltern 72 derart befestigt, daß die Leiterplatte 71 entsprechend der Bewegungen der Lagerhülse 48' mitgeführt wird. Wird nun der Handgriff 42' in der Längsachse des Schalthebels 10' zur Betätigung des Scheibenwischers gedreht, so wird die Drehung über die Welle 33' auf ein an der Lagerhülse 48' angeordnetes Koppelelement 73 übertragen, das den optischen Schalter 72 schaltet. Da sowohl das Koppelelement 73 als auch die Leiterplatte 71 mit den optischen Schaltern 72 sich im Gegensatz zur ortsfesten Leiterplatte 12 mit der Lagerhülse 48' mitbewegen, ist kein Gelenk zur Übertragung der Drehbewegung von der Welle 33' auf das Koppelelement 73 notwendig. Anstelle des Gelenks wird dann jedoch zusätzlich zur Leiterplatte 12 eine weitere Leiterplatte 71 benötigt, die miteinander über eine flexible elektrische Verbindungsleitung 74 verbunden sind.

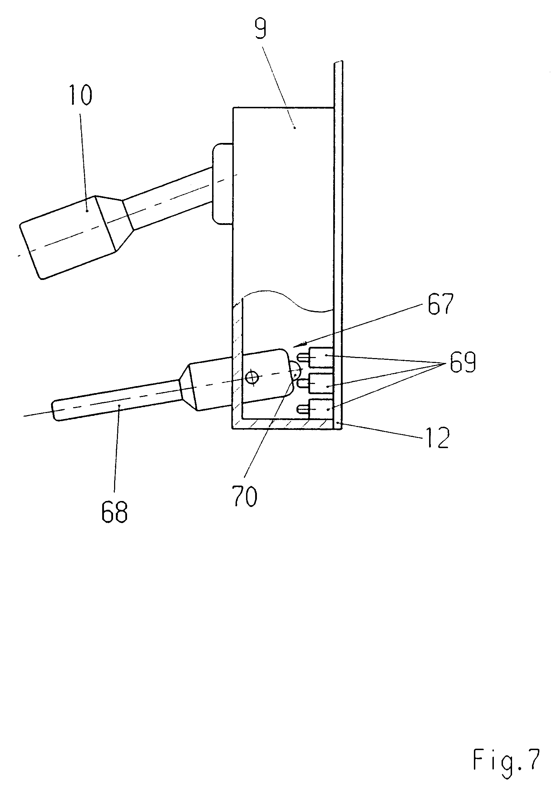

An oder im Gehäuse 9 des Lenkstockschalters 1 können noch zusätzliche Schalter für weitere Funktionen angeordnet sein. Beispielsweise kann es sich dabei um einen in Fig. 7 gezeigten Schalter 67 für die Geschwindigkeitsregelanlage, für die Bedienung eines Autoradios, o. dgl. handeln. Im Gehäuse 9 ist ein weiterer Schalthebel 68 zur Bedienung des Schalters 67 in der zweiten Ebene drehbar gelagert. Auf der Leiterplatte 12 im Gehäuse 9 sind herkömmliche elektrische Schaltelemente 69 angeordnet, die entsprechende der Stellung des Schalthebels 68 mittels eines am Schalthebel 68 angeordneten Ansatzes 70 betätigt werden. Selbstverständlich können anstelle der elektrischen Schaltelemente 69 auch optische Schalter verwendet werden, die analog zu denjenigen im Lenkstockschalter 1 ausgestaltet sind.

Wie weiter in Fig. 8 zu sehen ist, befindet sich an der Leiterplatte 12 eine flexible Anschlußleitung 75. Diesel dient zur Übermittlung von Signalen, die von am Lenkrad angeordneten Sensoren erzeugt werden. Diese Signale können beispielsweise die Lenkradverstellung betreffen und in einer Elektronik auf der Leiterplatte 12 ausgewertet werden. Die Lenkradsignale können über den bereits beschriebenen Bus 7 zur Auslösung von bestimmten Aktoren weitergeleitet werden.

Die Erfindung ist nicht auf die beschriebenen und dargestellten Ausführungsbeispiele beschränkt. Sie umfaßt vielmehr auch alle fachmännischen Weiterbildungen im Rahmen der Patentansprüche. So kann der erfindungsgemäße Schalter nicht nur in Kraftfahrzeugen eingesetzt werden, sondern auch an Geräten, wo mit einem Schalthebel mehrere Funktionen gleichzeitig geschaltet werden sollen. Beispielsweise kann es sich bei solchen Geräten um Werkzeugmaschinen, Eingabegeräte für Computer, u. dgl. handeln. Von Vorteil ist dabei, wenn die optischen Schalttelemente mit einem Bus-System zur Übermittlung der Signale in Verbindung stehen. Selbstverständlich lassen sich die optischen Schaltelemente jedoch auch als Ersatz für herkömmliche elektrische Schaltelemente ohne Anschluß an ein Bus-System benutzen.
- 1:: Lenkstockschalter
- 2:: Zündschloßschalter
- 3:: Lenksäule
- 4, 5:: Steuergerät
- 6:: Anzeigeinstrument
- 7:: Bus
- 8:: Bus-IC
- 9:: Gehäuse (von Lenkstockschalterr)
- 10,10':: Schalthebel
- 11:: Schaltelement (in Lenkstockschalter)
- 12:: Leiterplatte
- 13:: Anschluß (an Leiterplatte)
- 14:: Lichtsendeelement
- 15:: Lichtempfangselement
- 16,16':: optischer Schalter
- 17,17':: Lichtleiteranordnung
- 18,18':: Kopplungselement
- 19:: lichtdurchlässiges Kopplungselement
- 20, 21, 22, 20', 21' 22':: Schenkel (der Lichtleiteranordnung)
- 23,23':: Trennstelle
- 24:: Kupplungselement
- 25:: Lichtleiter
- 27a, b:: optischer Schalter
- 28a, b:: Trennstelle
- 29a, b:: Schenkel
- 30:: Aufnahme
- 31:: Führung
- 32:: Federelement
- 33,33':: Welle
- 34:: Schenkel
- 35a, b:: Lichtempfangselement
- 36:: optischer Schalter (für Lichthupe)
- 37:: Lichtsendeelement
- 38:: Trennstelle
- 39:: Blende
- 40:: Lochblende
- 41:: Öffnung
- 42:: Handgriff
- 43:: Rasteinrichtung
- 44:: Kugel
- 45:: Feder
- 46:: Gegenstück
- 47:: Vertiefung
- 48,48':: Lagerhülse
- 49:: Verbindungsglied
- 50:: Koppelring (für Blinker)
- 51:: Drehzapfen
- 52:: Lagerbock
- 53,53':: Ansatz
- 54:: Öffnung
- 55,55':: optischer Schalter
- 56:: Trennstelle
- 57:: Drehhülse
- 58:: Zwischenring
- 59:: Drehring
- 60:: Mitnehmerzapfen
- 61:: Drehzapfen
- 65:: erste Drehachse
- 66:: zweite Drehachse
- 67:: Schalter für Geschwindigkeitsregelanlage
- 68:: Schalthebel (des Schalters zur Geschwindigkeitsregelung)
- 69:: elektrisches Schaltelement
- 70:: Ansatz (an Schalthebel)
- 71:: Leiterplatte (für Lenkstockschalter in weiterer Ausführung)
- 72:: optischer Schalter
- 73:: Koppelelement
- 74:: flexible Verbindungsleitung
- 75:: Anschlußleitung (für Lenkradsignale)

## Patentansprüche

1. Schalter vorzugsweise am Lenkrad eines Kraftfahrzeugs, insbesondere Lenkstockschalter (1), mit einem Schalthebel (10), der von einem vorzugsweise seitlich der Lenksäule (3) angeordneten Gehäuse (9) abgeht und der wenigstens in einer Ebene zur Lenksäule (3) beweglich gelagert ist, und mit auf einer Leiterplatte (12) angeordneten Schaltelementen (11), von denen wenigstens eines als optisches Lichtsende- und/oder Lichtempfangselement (14, 15; 37, 35a, 35b) ausgebildet ist, wobei der in der Ebene bewegbare Schalthebel (10) mit den Schaltelementen (11) zu deren Betätigung in Wirkverbindung steht, dadurch gekennzeichnet, daß das optische Lichtsende- und/oder Lichtempfangselement (14, 15; 37, 35a, 35b) mit einem optischen Schalter (16, 16', 27a, 27b, 36, 55, 55') in optischer Verbindung steht, und daß der optische Schalter (16, 16', 27a, 27b, 36, 55, 55') innerhalb des Gehäuses (9) derart angeordnet ist, daß der Schaltvorgang durch den Schalthebel (10) am optischen Schalter (16, 16', 27a, 27b, 36, 55, 55') bewirkbar ist.

2. Schalter nach Anspruch 1, dadurch gekennzeichnet, daß der optische Schalter (16, 16') als Lichtleiterschalter ausgebildet ist, der aus wenigstens einem Teilbereich einer Lichtleiteranordnung (17, 17') und einem mit dem Schalthebel (10) zusammenwirkenden Kopplungselement (18, 18') zur schaltbaren Beeinflussung des über die Lichtleiteranordnung (17, 17') übertragenen Lichtes besteht.

3. Schalter nach Anspruch 2, dadurch gekennzeichnet, daß die Lichtleiteranordnung (17, 17') des optischen Schalters (16, 16') aus einem Kernbereich und einem diesen umgebenden Mantel besteht, wobei der Mantel einen vom Kernbereich unterschiedlichen Brechungsindex besitzt, derart daß das Licht durch Totalreflexion im Kernbereich geführt wird.

4. Schalter nach Anspruch 3, dadurch gekennzeichnet, daß die Lichtleiteranordnung (17, 17') aus Glas besteht.

5. Schalter nach Anspruch 3, dadurch gekennzeichnet, daß die Lichtleiteranordnung (17, 17') aus optisch transparenten Kunststoff besteht.

6. Schalter nach einem der Ansprüche 2 bis 5, dadurch gekennzeichnet, daß der den Lichtleiterschalter bildende Teilbereich der Lichtleiteranordnung (17, 17') als massives Element ausgebildet ist.

7. Schalter nach Anspruch 6, dadurch gekennzeichnet, daß der optische Schalter (16, 16', 27a, 27b, 36, 55, 55') getrennt von der Leiterplatte (12) angeordnet ist.

8. Schalter nach Anspruch 7, dadurch gekennzeichnet, daß der optische Schalter (16, 16', 27a, 27b, 36, 55, 55') außerhalb der Ebene der Leiterplatte (12), vorzugsweise ungefähr senkrecht stehend zur Ebene der Leiterplatte (12) angeordnet ist.

9. Schalter nach Anspruch 7 oder 8, dadurch gekennzeichnet, daß der optische Schalter (16) über Teile der Lichtleiteranordnung (17) mit dem Lichtsende- und/oder Lichtempfangselement (14, 15) optisch gekoppelt ist.

10. Schalter nach Anspruch 7 oder 8, dadurch gekennzeichnet, daß der optische Schalter (16') mit dem Lichtsende- und/oder Lichtempfangselement (14, 15) durch zugeordnete optische Lichtleiter (25) verbunden ist.

11. Schalter nach Anspruch 10, dadurch gekennzeichnet, daß der Lichtleiter (25) als flexibles Lichtleiter-Kabel ausgebildet ist.

12. Schalter nach einem der Ansprüche 1 bis 11, dadurch gekennzeichnet, daß das Lichtsendeelement (14, 37) aus einem Leuchtmittel besteht.

13. Schalter nach Anspruch 12, dadurch gekennzeichnet, daß das Leuchtmittel aus einer Leuchtdiode besteht.

14. Schalter nach Anspruch 12 oder 13, dadurch gekennzeichnet, daß das Lichtempfangselement (15, 35a, 35b) aus einer Photodiode oder einem Phototransistor besteht.

15. Schalter nach Anspruch 12, 13 oder 14, dadurch gekennzeichnet, daß das Lichtsende- und das Lichtempfangselement (14, 15; 37, 35a, 35b) als SMD-Bauteile (SMD = Surface Mounted Device) ausgebildet sind.

16. Schalter nach einem der Ansprüche 12 bis 15, dadurch gekennzeichnet, daß für jeden optischen Schalter (16, 16') jeweils ein Lichtsende- und Lichtempfangselement (14, 15) auf der Leiterplatte (12) angeordnet ist.

17. Schalter nach Anspruch 16, dadurch gekennzeichnet, daß die Lichtleiteranordnung des optischen Schalters (16) aus zwei ungefähr senkrecht zur Leiterplatte (12) verlaufenden Schenkeln (20, 22) und einem parallel zur Leiterplatte (12) verlaufenden Schenkel (21) besteht, die U-brückenförmig miteinander verbunden sind, wobei einer der senkrecht stehenden Schenkel (20) am Lichtsendeelement (14) und der andere Schenkel (22) am Lichtempfangselement (15) angeordnet ist und sich an einem Schenkel (22) eine Trennstelle (23) befindet, in die das Kopplungselement (18) eingreift.

18. Schalter nach Anspruch 17, dadurch gekennzeichnet, daß das Kopplungselement (18) aus einer in die Trennstelle (23) bewegbaren Lochblende (40) mit einer Öffnung (41) besteht.

19. Schalter nach einem der Ansprüche 12 bis 15, dadurch gekennzeichnet, daß ein Lichtsendeelement (37) auf der Leiterplatte (12) für mehrere mit diesem in optischer Verbindung stehende optische Schalter (27a, 27b, 36) angeordnet ist.

20. Schalter nach Anspruch 19, dadurch gekennzeichnet, daß die Lichtleiteranordnung der optischen Schalter (27a, 27b) mehrere ungefähr parallel zur Leiterplatte (12) verlaufende Schenkel (29a, 29b) mit Trennstellen (28a, 28b) besitzt, die von einem ungefähr senkrecht zur Leiterplatte (12) verlaufenden Schenkel (34) abgehen, wobei die Trennstellen (28a, 28b) in vertikaler Richtung übereinander liegen und in die Trennstellen (28a, 28b) ein lichtdurchlässiges Kopplungselement (19) an einer Aufnahme (30) linear bewegbar ist.

21. Schalter nach einem der Ansprüche 1 bis 20, dadurch gekennzeichnet, daß die Wirkverbindung zwischen dem Schalthebel (10) und dem jeweiligen optischen Schalter (16, 16', 27a, 27b, 36, 55, 55') über ein Kupplungselement (24) herstellbar ist.

22. Schalter nach Anspruch 21, dadurch gekennzeichnet, daß das Kupplungselement (24) eine Lagerhülse (48) und einen Koppelring (50) besitzt, wobei die Lagerhülse (48) mittels Verbindungsglieder (49) im Koppelring (50) und der Koppelring (50) um Drehzapfen (51) in Lagerböcken (52) drehbar gelagert sind und die Verbindungsglieder (49) und die Drehzapfen (51) in der Art eines Kardangelenks ungefähr senkrecht aufeinander stehen.

23. Schalter nach Anspruch 22, dadurch gekennzeichnet, daß sich am Koppelring (51) Ansätze (53, 53') befinden, die jeweils in die Trennstelle (56) eines optischen Schalters (55, 55') zu dessen schaltbarer Beeinflussung eingreifen.

24. Schalter nach Anspruch 23, dadurch gekennzeichnet, daß sich an der Lagerhülse (48) eine Blende (39) befindet, die in die Trennstelle (38) eines optischen Schalters (36) zu dessen schaltbaren Beeinflussung eingreift.

25. Schalter nach einem der Ansprüche 21 bis 24, dadurch gekennzeichnet, daß am Schalthebel (10) ein Handgriff (42) drehbar angeordnet ist, wobei dessen Drehbewegung über eine Welle (33) auf ein in der Lagerhülse (48) befindliches Kardangelenk übertragbar ist.

26. Schalter nach Anspruch 25, dadurch gekennzeichnet, daß das Kardangelenk aus einer Drehhülse (57), einem Zwischenring (58) und einem Drehring (59) besteht, wobei Mitnehmerzapfen (60) der Drehhülse (57) in den Zwischenring (58) und Drehzapfen (61) des Zwischenrings (58) in den Drehring (59) eingreifen und die Mitnehmerzapfen (60) und Drehzapfen (61) ungefähr senkrecht aufeinander stehen.

27. Schalter nach Anspruch 26, dadurch gekennzeichnet, daß sich am Drehring (59) ein als Ansatz ausgebildetes Kopplungselement (18) befindet, das in die Trennstelle (23) eines optischen Schalters (16) zu dessen schaltbaren Beeinflussung eingreift.

28. Schalter nach einem der Ansprüche 21 bis 27, dadurch gekennzeichnet, daß der Handgriff (42) in Richtung des Schalthebels (10) verschiebbar angeordnet ist und die Verschiebung über die Welle (33) auf eine Aufnahme (30) mit einem daran angebrachten lichtdurchlässigen Kopplungselement (19) übertragbar ist, das in die Trennstelle (28a, 28b) eines optischen Schalters (27a, 27b) zu dessen schaltbaren Beeinflussung bringbar ist.

29. Schalter nach einem der Ansprüche 1 bis 28, dadurch gekennzeichnet, daß die Lichtsende- und Lichtempfangselemente (14, 15; 35a, 35b, 37) auf einer einzigen Leiterplatte (12) angeordnet sind und diese Leiterplatte (12) auf einer Seite des Gehäuses (9) als Abschluß angeordnet ist.

30. Schalter nach einem der Ansprüche 21 bis 24, dadurch gekennzeichnet, daß an der Lagerhülse (48') eine weitere Leiterplatte (71) mit wenigstens einem optischen Schalter (72) befestigt ist, wobei die Leiterplatte (71) mit den Bewegungen der Lagerhülse (48') mitgeführt wird, und daß die Welle (33') mit einem an der Lagerhülse (48') angeordneten Koppelelement (73) verbunden ist, das in den optischen Schalter (72) zu dessen schaltbaren Beeinflussung eingreift.

31. Schalter nach Anspruch 30, dadurch gekennzeichnet, daß die weitere Leiterplatte (71) mit der Leiterplatte (12) über eine flexible elektrische Verbindungsleitung (74) verbunden ist.

32. Schalter nach einem der Ansprüche 1 bis 31, dadurch gekennzeichnet, daß ein Bus-IC (8) auf der Leiterplatte (12) angeordnet ist, wobei das Bus-IC (8) die vom Lichtempfangselement (15, 35a, 35b) zu elektrischen Signalen umgewandelten Schaltsignale der optischen Schalter (16, 16', 27a, 27b, 36, 55, 55', 72) in Bus-Signale weiterverarbeitet und daß elektrische Anschlüsse (13) für den Bus (7) an der der Außenseite des Gehäuses (9) zugeordneten Seite der Leiterplatte (12) angeordnet sind, die wiederum über die Leiterplatte (12) mit dem Bus-IC (8) in elektrischer Verbindung stehen.

33. Schalter nach einem der Ansprüche 1 bis 32, dadurch gekennzeichnet, daß am oder im Gehäuse (9) Schalter für weitere Funktionen, wie ein Schalter (67) für die Geschwindigkeitsregelanlage, für die Bedienung eines Autoradios, o. dgl., angeordnet ist.

## Claims

1. Switch, preferably on the steering wheel of a motor vehicle, in particular a steering column switch (1), with a control lever (10), which projects from a housing (9) preferably arranged to the side of the steering column (3) and which is mounted to move at least in a plane of the steering column (3), and with switching elements (11) arranged on a circuit board (12), of which at least one is provided in the form of an optical light transmitting and/or light receiving element (14, 15; 37, 35a, 35b), the control lever (10) movable in one plane standing in active connection with the switching elements (11) for their operation, characterised in that the optical light transmitting and/or light receiving element (14, 15; 37, 35a, 35b) is optically connected to an optical switch (16, 16', 27a, 27b, 36, 55, 55'); and that the optical switch (16, 16', 27a, 27b, 36, 55, 55') is arranged inside the housing (9) in such a way that the switching process may be effected at the optical switch (16, 16', 27a, 27b, 36, 55, 55') by the control lever (10).

2. Switch according to Claim 1, characterised in that the optical switch (16, 16') is constructed as a light conductor switch, which comprises at least one partial area of a light conducting arrangement (17, 17') and a coupling element (18, 18') cooperating with the control lever (10) to influence the light transmitted via the light conducting arrangement (17, 17') by switching.

3. Switch according to Claim 2, characterised in that the light conducting arrangement (17, 17') of the optical switch (16, 16') comprises a core region and a shell surrounding this, whereby the shell has a different refractive index from the core region, such that the light is directed in the core region through total reflection.

4. Switch according to Claim 3, characterized in that the light conducting arrangement (17, 17') is made of glass.

5. Switch according to Claim 3, characterised in that the light conducting arrangement (17, 17') is made of optically transparent plastic.

6. Switch according to one of Claims 2 to 5, characterised in that the partial area of the light conducting arrangement (17, 17') forming the light conductor switch is constructed as a solid element.

7. Switch according to Claim 6, characterized in that the optical switch (16, 16', 27a, 27b, 36, 55, 55') is arranged separately from the circuit board (12).

8. Switch according to Claim 7, characterized in that the optical switch (16, 16', 27a, 27b, 36, 55, 55') is arranged outside the plane of the circuit board (12), preferably standing approximately perpendicular to the plane of the circuit board (12).

9. Switch according to Claim 7 or 8, characterised in that the optical switch (16) is optically coupled to the light transmitting and/or light receiving element (14, 15) via parts of the light conducting arrangement (17).

10. Switch according to Claim 7 or 8, characterised in that the optical switch (16') is connected to the light transmitting and/or light receiving element (14, 15) via allocated optical light conductors (25).

11. Switch according to Claim 10, characterised in that the light conductor (25) is constructed as a flexible fibre optic light guide.

12. Switch according to one of Claims 1 to 11, characterised in that the light transmitting element (14, 37) comprises an illumination means.

13. Switch according to Claim 12, characterised in that the illumination means comprises a light-emitting diode.

14. Switch according to Claim 12 or 13, characterised in that the light receiving element (15, 35a, 35b) comprises a photo-diode or a photo-transistor.

15. Switch according to Claim 12, 13 or 14, characterised in that the light transmitting and the light receiving element (14, 15; 37, 35a, 35b) are constructed as SMD-components (SMD = surface mounted device).

16. Switch according to one of Claims 12 to 15, characterised in that a respective light transmitting and light receiving element (14, 15) is arranged on the circuit board (12) for each optical switch (16, 16').

17. Switch according to Claim 16, characterised in that the light conducting arrangement of the optical switch (16) comprises two legs (20, 22) running approximately perpendicular to the circuit board (12) and one leg (21) running parallel to the circuit board (12), which are connected to one another to form a U-bridge shape, whereby one of the perpendicular legs (20) is arranged on the light transmitting element (14) and the other leg (22) is arranged on the light receiving element (15), and a separation point (23) is located on one leg (22) into which the coupling element (18) engages.

18. Switch according to Claim 17, characterised in that the coupling element (18) comprises a pinhole diaphragm (40) movable into the separation point (23) with an opening (41).

19. Switch according to one of Claims 12 to 15, characterised in that a light transmitting element (37) is provided on the circuit board (12) for several optical switches (27a, 27b, 36) optically connected thereto.

20. Switch according to Claim 19, characterised in that the light conducting arrangement of the optical switches (27a, 27b) has several legs (29a, 29b) running approximately parallel to the circuit board (12) with separation points (28a, 28b), which project from a leg (34) running approximately perpendicular to the circuit board (12), whereby the separation points (28a, 28b) lie vertically one above the other, and a light-transparent coupling element (19) is linearly movable on a mount (30) into the separation points (28a, 28b).

21. Switch according to one of Claims 1 to 20, characterised in that the active connection between the control lever (10) and the respective optical switch (16, 16', 27a, 27b, 36, 55, 55') may be formed via a coupling element (24).

22. Switch according to Claim 21, characterised in that the coupling element (24) has a bush (48) and a coupling ring (50), whereby the bush (48) is rotatably mounted in the coupling ring (50) by means of connecting elements (49) and the coupling ring (50) is mounted to rotate around pivot pins (51) in support blocks (52), and the connecting elements (49) and the pivot pins (51) stand approximately vertically on one another in the manner of a universal joint.

23. Switch according to Claim 22, characterised in that projections (53, 53') are located on the coupling ring (51), each of which engaging into the separation point (56) of an optical switch (55, 55') to influence this by switching.

24. Switch according to Claim 23, characterised in that a diaphragm (39) is located on the bush (48), which engages into the separation point (38) of an optical switch (36) to influence this by switching.

25. Switch according to one of Claims 21 to 24, characterised in that a handle (42) is rotatably disposed on the control lever (10), and its rotational movement may be transmitted via a shaft (33) onto a universal joint located in the bush (48).

26. Switch according to Claim 25, characterised in that the universal joint comprises a rotary sleeve (57), an intermediate ring (58) and a rotary ring (59), whereby driver journals (60) of the rotary sleeve (57) engage into the intermediate ring (58) and rotary journals (61) of the intermediate ring (58) engage into the rotary ring (59), and the driver journals (60) and rotary journals (61) stand approximately vertically on one another.

27. Switch according to Claim 26, characterised in that a coupling element (18) constructed as a projection is located on the rotary ring (59), said coupling element engaging into the separation point (23) of an optical switch (16) to influence this by switching.

28. Switch according to one of Claims 21 to 27, characterised in that the handle (42) is arranged to slide in the direction of the control lever (10) and the sliding movement may be transmitted via the shaft (33) onto a mount (30) with a light-transparent coupling element (19) attached thereto which may be brought into the separation point (28a, 28b) of an optical switch (27a, 27b) to influence this by switching.

29. Switch according to one of Claims 1 to 28, characterised in that the light transmitting and light receiving elements (14, 15; 35a, 35b, 37) are arranged on a single circuit board (12) and this circuit board (12) is arranged on one side of the housing (9) as a termination.

30. Switch according to one of Claims 21 to 24, characterised in that a further circuit board (71) with at least one optical switch (72) is fastened to the bush (48'), whereby the circuit board (71) is driven along with the movements of the bush (48'); and that the shaft (33') is connected to a coupling element (73) arranged on the bush (48'), said coupling element engaging into the optical switch (72) to influence it by switching.

31. Switch according to Claim 30, characterised in that the further circuit board (71) is connected to the circuit board (12) via a flexible electrical connection lead (74).

32. Switch according to one of Claims 1 to 31, characterised in that a bus integrated circuit (8) is arranged on the circuit board (12), whereby the bus IC (8) further processes the switching signals of the optical switches (16, 16', 27a, 27b, 36, 55, 55', 72), which are converted by the light receiving element (15, 35a, 35b) into electrical signals, into bus signals; and that electrical terminals (13) for the bus (7) are arranged on the side of the circuit board (12) allocated to the outside of the housing (9), which are in turn electrically connected to the bus IC (8) via the circuit board (12).

33. Switch according to one of Claims 1 to 32, characterised in that switches for further functions are arranged on or in the housing (9), e.g. a switch (67) for the speed control system, for the operation of a car radio or similar.

## Revendications

1. Commutateur, avantageusement sur la roue directrice d'un véhicule automobile, en particulier commutateur fixé à la colonne de direction (1), comportant un levier de commutation (10), qui sort d'un boîtier (9) agencé avantageusement latéralement à la colonne de direction (3) et est monté de façon mobile au moins dans un plan par rapport à la colonne de direction (3), et comportant des éléments de commutation (11) agencés sur une plaquette conductrice (12), desquels au moins l'un est réalisé comme élément émettant de la lumière et/ou élément recevant de la lumière optiques (14,15;37, 35a,35b), le levier de commutation (10) mobile dans le plan étant en liaison active avec les éléments de commutation (11) pour leur actionnement,
caractérisé en ce que l'élément d'émission de lumière et/ou l'élément de réception de lumière optiques (14,15;37,35a, 35b) se trouvent en liaison optique avec un commutateur optique (16,16',27a,27b,36,55,55'), et en ce que le commutateur optique (16,16',27a,27b,36,55,55') est agencé à l'intérieur du boîtier (9) de sorte que le processus de commutation peut être effectué par le levier de commutation (10) sur le commutateur optique (16,16',27a,27b,36,55,55').

2. Commutateur selon la revendication 1,
caractérisé en ce que le commutateur optique (16,16') est réalisé comme commutateur à guide de lumière, qui est constitué d'au moins une zone partielle d'un agencement de guide de lumière (17,17') et d'un élément de couplage (18,18') coopérant avec le levier de commutation (10) pour influencer, de façon commutable, la lumière transmise par l'intermédiaire de l'agencement de guide de lumière (17,17').

3. Commutateur selon la revendication 2,
caractérisé en ce que l'agencement de guide de lumière (17,17') du commutateur optique (16,16') est constitué d'une zone de noyau et d'une enveloppe entourant celle-ci, l'enveloppe possédant un indice de réfraction différent de la zone de noyau, de sorte que la lumière est guidée par réflexion totale dans la zone de noyau.

4. Commutateur selon la revendication 3,
caractérisé en ce que l'agencement de guide de lumière (17,17') est réalisé en verre.

5. Commutateur selon la revendication 3,
caractérisé en ce que l'agencement de guide lumière (17,17') est constitué d'une matière synthétique optiquement transparente.

6. Commutateur selon une des revendications 2 à 5,
caractérisé en ce que la zone partielle, formant le commutateur à guide de lumière, de l'agencement de guide de lumière (17,17') est réalisée comme élément massif.

7. Commutateur selon la revendication 6,
caractérisé en ce que le commutateur optique (16,16',27a, 27b,36,55,55') est agencé de façon séparée de la plaquette conductrice (12).

8. Commutateur selon la revendication 7,
caractérisé en ce que le commutateur optique (16,16',27a, 27b,36,55,55') est agencé à l'extérieur du plan de la plaquette conductrice (12), avantageusement sensiblement perpendiculairement au plan de la plaquette conductrice (12).

9. Commutateur selon la revendication 7 ou 8,
caractérisé en ce que le commutateur optique (16) est optiquement couplé, par l'intermédiaire de parties de l'agencement de guide de lumière (17), à l'élément d'émission de lumière et/ou l'élément de réception de lumière (14,15).

10. Commutateur selon la revendication 7 ou 8,
caractérisé en ce que le commutateur optique (16') est relié à l'élément d'émission de lumière et/ou l'élément de réception de lumière (14,15) par des guides de lumière optiques (25) associés.

11. Commutateur selon la revendication 10,
caractérisé en ce que le guide de lumière (25) est réalisé comme câble de guide de lumière souple.

12. Commutateur selon une des revendications 1 à 11,
caractérisé en ce que l'élément d'émission de lumière (14,37) est constitué d'un moyen d'éclairage.

13. Commutateur selon la revendication 12,
caractérisé en ce que le moyen d'éclairage est constitué d'une diode luminescente.

14. Commutateur selon la revendication 12 ou 13,
caractérisé en ce que l'élément de réception de lumière (15,35a,35b) est constitué d'une photodiode ou d'un phototransistor.

15. Commutateur selon la revendication 12, 13 ou 14,
caractérisé en ce que l'élément d'émission de lumière et l'élément de réception de lumière (14,15;37,35a,35b) sont réalisés comme pièces montées en surface (SMD).

16. Commutateur selon une des revendications 12 à 15,
caractérisé en ce que, pour chaque commutateur optique (16,16'), il est agencé, à chaque fois, un élément d'émission de lumière et un élément de réception de lumière (14,15) sur la plaquette conductrice (12).

17. Commutateur selon la revendication 16,
caractérisé en ce que l'agencement de guide de lumière du commutateur optique (16) est constitué de deux branches (20,22) s'étendant sensiblement perpendiculairement à la plaquette conductrice (12) et d'une branche (21) s'étendant parallèlement à la plaquette conductrice (12), qui sont reliées ensemble en formant un pont en U, une des branches perpendiculaires (20) étant agencée sur l'élément d'émission de lumière (14) et l'autre branche (22) sur l'élément de réception de lumière (15), et un point de rupture (23) se trouvant sur une branche (22), dans lequel s'engage l'élément de couplage (18).

18. Commutateur selon la revendication 17,
caractérisé en ce que l'élément de couplage (18) est constitué d'un sténopé (40), mobile dans le point de rupture (23), ayant une ouverture (41).

19. Commutateur selon une des revendications 12 à 15,
caractérisé en ce qu'un élément d'émission de lumière (37) est agencé sur la plaquette conductrice (12) pour plusieurs commutateurs optiques (27a,27b,36) se trouvant en liaison optique avec celui-ci.

20. Commutateur selon la revendication 19,
caractérisé en ce que l'agencement de guide de lumière des commutateurs optiques (27a,27b) possède plusieurs branches (29a,29b) s'étendant sensiblement parallèlement à la plaquette conductrice (12), ayant des points de rupture (28a, 28b) qui sortent d'une branche (34) s'étendant sensiblement perpendiculairement à la plaquette conductrice (12), les points de rupture (28a,28b) étant agencés l'un au-dessus de l'autre en direction verticale et, dans les points de rupture (28a,28b), un élément de couplage (19) transparent est linéairement mobile sur un élément de réception (30).

21. Commutateur selon une des revendications 1 à 20,
caractérisé en ce que la liaison active entre le levier de commutation (10) et le commutateur optique respectif (16,16',27a,27b,36,55,55') peut être réalisée par l'intermédiaire d'un élément de couplage (24).

22. Commutateur selon la revendication 21,
caractérisé en ce que l'élément de couplage (24) possède un manchon de support (48) et une bague de couplage (50), le manchon de support (48) étant monté rotatif, au moyen d'organes de liaison (49), dans la bague de couplage (50), et la bague de couplage (50) étant montée rotative autour de pivots (51) dans des blocs de support (52), et les organes de liaison (49) et les pivots (51) étant agencés sensiblement perpendiculairement les uns par rapport aux autres à la manière d'un joint à la Cardan.

23. Commutateur selon la revendication 22,
caractérisé en ce que, sur la bague de couplage (51), se trouvent des pièces (53,53') qui, à chaque fois, s'engagent dans le point de rupture (56) d'un commutateur optique (55,55') pour l'influencer de façon commutable.

24. Commutateur selon la revendication 23,
caractérisé en ce que, sur le manchon de support (48), se trouve un obturateur (39) qui s'engage dans le point de rupture (38) d'un commutateur optique (36) pour l'influencer de façon commutable.

25. Commutateur selon une des revendications 21 à 24,
caractérisé en ce que, sur le levier de commutation (10), il est agencé, de façon rotative, une poignée (42), le mouvement de rotation de celle-ci pouvant être transmis, par l'intermédiaire d'un arbre (33), sur un joint à la Cardan se trouvant dans le manchon de support (48).

26. Commutateur selon la revendication 25,
caractérisé en ce que le joint à la Cardan est constitué d'un manchon rotatif (57), d'une bague intermédiaire (58), et d'une bague rotative (59), des tourillons d'entraînement (60) du manchon rotatif (57) s'engageant dans la bague intermédiaire (58) et des tourillons rotatifs (61) de la bague intermédiaire (58) s'engageant dans la bague rotative (59), et les tourillons d'entraînement (60) et les tourillons rotatifs (61) se trouvant sensiblement perpendiculaires les uns par rapport aux autres.

27. Commutateur selon la revendication 26,
caractérisé en ce que, sur la bague rotative (59), se trouve un élément de couplage (18) réalisé comme saillie, élément qui s'engage dans le point de rupture (23) d'un commutateur optique (16) pour l'influencer de façon commutable.

28. Commutateur selon une des revendications 21 à 27,
caractérisé en ce que la poignée (42) est agencée de façon déplaçable en direction du levier de commutation (10) et le déplacement peut être transmis, par l'intermédiaire de l'arbre (33), sur un élément de réception (30) avec un élément de couplage (19) transparent agencé sur celui-ci, lequel peut être amené dans le point de rupture (28a,28b) d'un commutateur optique (27a,27b) pour l'influencer de façon commutable.

29. Commutateur selon une des revendications 1 à 28,
caractérisé en ce que les éléments d'émission de lumière et les éléments de réception de lumière (14,15;35a,35b,37) sont agencés sur une plaquette conductrice unique (12), et cette plaquette conductrice (12) est agencée sur un côté du boîtier (9) comme fermeture.

30. Commutateur selon une des revendications 21 à 24,
caractérisé en ce que, sur le manchon de support (48'), il est fixé une autre plaquette conductrice (71) avec au moins un commutateur optique (72), la plaquette conductrice (71) étant entraînée par les mouvements du manchon de support (48'), et en ce que l'arbre (33') est relié à un élément de couplage (73) agencé sur le manchon de support (48'), qui s'engage dans le commutateur optique (72) pour l'influencer de façon commutable.

31. Commutateur selon la revendication 30,
caractérisé en ce que l'autre plaquette conductrice (71) est reliée à la plaquette conductrice (12) par l'intermédiaire d'une liaison électrique souple (74).

32. Commutateur selon une des revendications 1 à 31,
caractérisé en ce qu'un bus à circuit intégré (8) est agencé sur la plaquette conductrice (12), le bus à circuit intégré (8) transformant les signaux de commutation, transformés par l'élément de réception de lumière (15,35a,35b,) en signaux électriques, des commutateurs optiques (16,16',27a,27b, 36,55,55',72) en signaux de bus, et en ce que des raccords électriques (13) pour le bus (7) sont agencés sur la face de la plaquette conductrice (12) associée à la face externe du boîtier (9), qui, à leur tour, sont en liaison électrique, par l'intermédiaire de la plaquette conductrice (12), avec le bus à circuit intégré (8).

33. Commutateur selon une des revendications 1 à 32,
caractérisé en ce que, sur ou dans le boîtier (9), il est agencé un commutateur pour d'autres fonctions, comme un commutateur (67) pour l'installation de régulation de vitesse, pour la mise en oeuvre d'un autoradio, ou analogue.
